Europäisches Patentamt

European Patent Office

Office européen des brevets

(11) Veröffentlichungsnummer: **0 201 045**
A2

# (12) EUROPÄISCHE PATENTANMELDUNG

(21) Anmeldenummer: 86105973.1

(22) Anmeldetag: 30.04.86

(51) Int. Cl.⁴: **B29C 49/22** , B29C 49/04 , B29C 47/20

(30) Priorität: 08.05.85 DE 3516470

(43) Veröffentlichungstag der Anmeldung:
17.12.86 Patentblatt 86/46

(84) Benannte Vertragsstaaten:
DE FR GB IT

(71) Anmelder: **BASF Aktiengesellschaft**
**Carl-Bosch-Strasse 38**
**D-6700 Ludwigshafen(DE)**

(72) Erfinder: **Lohrbaecher, Volker**
**Kisslichstrasse 1**
**D-6940 Weinheim(DE)**
Erfinder: **Franger, Dieter**
**Nelkenstrasse 7 b**
**D-6710 Frankenthal(DE)**

(54) Verfahren und Vorrichtung zur Herstellung blasgeformter Hohlkörper aus thermoplastischen Kunststoffen.

(57) Für die Herstellung blasgeformter Hohlkörper aus thermoplastischen Kunststoffen wird ein Vorformling, dessen Wandung aus wenigstens zwei konzentrischen Schichten besteht, von denen eine Schicht als Tragschicht ausgebildet ist, aus einem Schlauchkopf ausgestoßen und von einer Blasform umfaßt, in der das Aufblasen zum Hohlkörper durch Einführen eines Druckmittgels erfolgt. Zwecks Erzielung einer dauerhaften Verbindung hoher Festigkeit werden die Schmelzestränge für die Tragschicht und für eine oder mehrere innen und/oder außen auf der Tragschicht aufgebrachte Schichten kurz vor oder unmittelbar im Düsenbereich des Schlauchkopfes zusammengeführt und diskontinuierlich ausgestoßen. Das Verhältnis der Dicke der Tragschicht zur Dicke jeder weiteren Schicht ist ≤10:1.

FIG. 1

**Verfahren und Vorrichtung zur Herstellung blasgeformter Hohlkörper aus thermoplastischen Kunststoffen**

Die Erfindung betrifft ein Verfahren nach dem Oberbegriff des Anspruchs 1 sowie eine Vorrichtung zur Durchführung des Verfahrens.

Bei der Herstellung von Hohlkörpern aus thermoplastischem Kunststoff nach dem Blasverfahren wird aus einer Düse ein schlauchförmiger Vorformling aus warmplastischem Kunststoff ausgestoßen. Für größere Hohlkörpervolumen ist wegen der Auslängung des Vorformlings aufgrund seines Eigengewichts eine diskontinuierliche Austragung erforderlich. Dies geschieht mit Hilfe eines Schmelzespeichers oder Kopfspeichers, in dem plastifizierte Schmelze gesammelt und zu Beginn eines Arbeitszyklus ausgestoßen wird. Auf diese Weise kann ein Verformling in wenigen Sekunden extrudiert werden, während in der übrigen Zykluszeit keine Schmelze aus der Düse austritt. Der Vorformling wird dann von den beiden Hälften einer Blasform umfaßt und durch Einleiten eines Druckmittels aufgeblasen, bis er sich an die gekühlten Innenwände der Blasform anlegt, dort erstarrt und so die durch die Blasform vorgegebene Gestalt annimmt. Auf diese Weise werden bisher Hohlkörper mit einschichtiger Wandung gefertigt, die aber wegen der Durchlässigkeit der verwendeten Thermoplaste gegenüber bestimmten Flüssigkeiten, Gasen oder Dämpfen die Eigenschaft aufweisen, daß der im Hohlkörper befindliche Stoff, normalerweise eine Flüssigkeit, durch Eindiffundieren von außen oder durch Diffusion von innen in seiner Beschaffenheit oder Menge verändert werden kann.

Um diese unerwünschte Eigenschaft zu verbessern, sind bereits verschiedene Methoden beschrieben worden. So wird nach der DE-OS 30 09 463 ein gasdichter Hohlkörper, vorwiegend gedacht für die Verwendung als Kraftstoffbehälter, dadurch hergestellt, daß ein zweischichtiger Vorformling aus einer Tragschicht aus thermoplastischem Kunststoff und einer Schicht aus einem Haftvermittler extrudiert und wenigstens eine weitere Sperrschicht nachträglich in einem besonderen Arbeitsgang auf diesen Zweischichtenverbund aufgebracht wird. Es hat sich jedoch gezeigt, daß die Festigkeit der Verbindung zwischen Haftvermittlerschicht und Sperrschicht herstellungsbedingt vielfach nicht ausreichend ist. Darüber hinaus diffundiert das Füllgut durch die in der Regel innen befindliche Tragschicht und sammelt sich zwischen den Schichten, was in höchstem Maße unerwünscht ist. Schließlich hat diese Arbeitsweise auch wirtschaftliche Nachteile, da die Sperrschicht in einem zusätzlichen Arbeitsgang aufgebracht werden muß.

Es war daher Aufgabe der Erfindung, die Herstellung von Hohlkörpern, insbesondere von großvolumigen Hohlkörpern, aus einem Mehrschichtenverbund so zu verbessern, daß die geschilderten Nachteile vermieden werden.

Zur Lösung dieser Aufgabe werden die Maßnahmen nach dem Kennzeichen des Anspruchs 1 vorgeschlagen.

Nach der Erfindung können mehrschichtige Hohlkörper in einem Arbeitsgang hergestellt werden. Dabei werden die Schmelzestränge für die Tragschicht und für eine oder mehrere zusätzliche Schichten bereits im Schlauchkopf oder Kopfspeicher zusammengeführt und anschließend gemeinsam in einer Blasform in die endgültige Form durch Aufblasen gebracht wird. Auf diese Weise ergibt sich zwischen den Schichten eine dauerhafte Verbindung hoher Festigkeit. Die Wahl einer verhältnismäßig dicken Tragschicht, vorzugsweise beträgt das Verhältnis der Dicke der Tragschicht zur Dicke jeder weiteren Schicht $\geq 10{:}1$, führt einerseits zu einer Verringerung der Permeabilität und erlaubt andererseits die Verwendung von Materialabfällen aus bereits hergestellten Hohlkörpern. Die Materialabfälle lassen sich problemlos im Schmelzestrom der Tragschicht einbetten, ohne daß deren Funktion beeinträchtigt wird. Durch den diskontinuierlichen Austrag eines zwei-oder mehrschichtigen Vorformlings können größere Hohlkörper hergestellt werden und es wird vermieden, daß sich der schlauchförmige Vorformling während des Austragens unter seinem zunehmenden Eigengewicht auslängt.

Dadurch, daß die Zusammenführung der Schichten erst im Düsenbereich oder kurz davor erfolgt, ist es infolge der kurzen Wege bis zum Austritt des Materials aus der Düse möglich, den Verformling nur im Bereich des eigentlichen Blasteils zu beschichten. Hierdurch wird die erneute Verarbeitung von Materialabfällen erheblich erleichtert, da die Materialeigenschaften der Trägerschicht nicht durch weniger verträgliche Kunststoffe der zusätzlichen Schicht reduziert werden. Zur Durchführung dieser Verfahrensvariante ist es erforderlich, daß die Zuspeisung des Materials für die zusätzliche Schicht durch entsprechende Steuerung der Einspeisung nur zyklisch erfolgt.

Gegenstand der Erfindung ist weiterhin eine Vorrichtung zur Durchführung des Verfahrens mit den Merkmalen der Ansprüche 2 bis 4.

Beispielhafte Ausführungsformen der erfindungsgemäßen Vorrichtung sind in den Zeichnungen schematisch dargestellt und im folgenden näher erläutert.

Es zeigt

Figur 1 die Vorrichtung (Kopfspeicher) im Längsschnitt, bei der ein ver stärkender Schmelzestrang unmittelbar im Düsenbereich außen auf den Schmelzestrang der Tragschicht aufgebracht wird,

Figur 2 eine andere Ausführungsform im Längsschnitt, mit Einrichtungen für das Zusammenführen von Schmelzesträngen vor dem Düsenbereich und

Figur 3 eine weitere Ausführungsform, bei der zusätzliche Schmelzestränge innen auf den Schmelzestrang des Vorformlings aufgebracht werden.

Bei der Vorrichtung gemäß der Erfindung ist, wie bei den bisher bekannten Schlauchköpfen oder Kopfspeichern, ein Dorn in der Führungsbohrung - (2) eines Gehäuses(1) angeordnet. Der Dorn besteht aus mehreren Bauteilen (3, 4, 5) und bildet zusammen mit der Mantelfläche der Führungsbohrung einen Fließkanal(6) aus, durch den plastifizierter Kunststoff gefördert wird. Im oberen Bereich ist der Fließkanal zu einem Speicher (7), in dem ein Ringkolben (8) hin-und herbewegbar ist, erweitert. Der Fließkanal mündet auf der gegenüberliegenden Seite in einen Düsenkanal(9), welcher durch zwei miteinander korrespondierende kegelförmige Abschnitte (10, 11) und (12, 13) des Dorns und eines an der unteren Stirnfläche des Gehäuses (1) mittels eines Flansches (14) befestigten Düsenringes (15) gebildet wird. Durch Heben und Senken des Bauteils(5) ist es möglich, den Düsenspalt(16) zu verändern und somit die Dicke eines Vorformlings zu regulieren bzw. den Austrag eines Vorformlings zu unterbrechen.

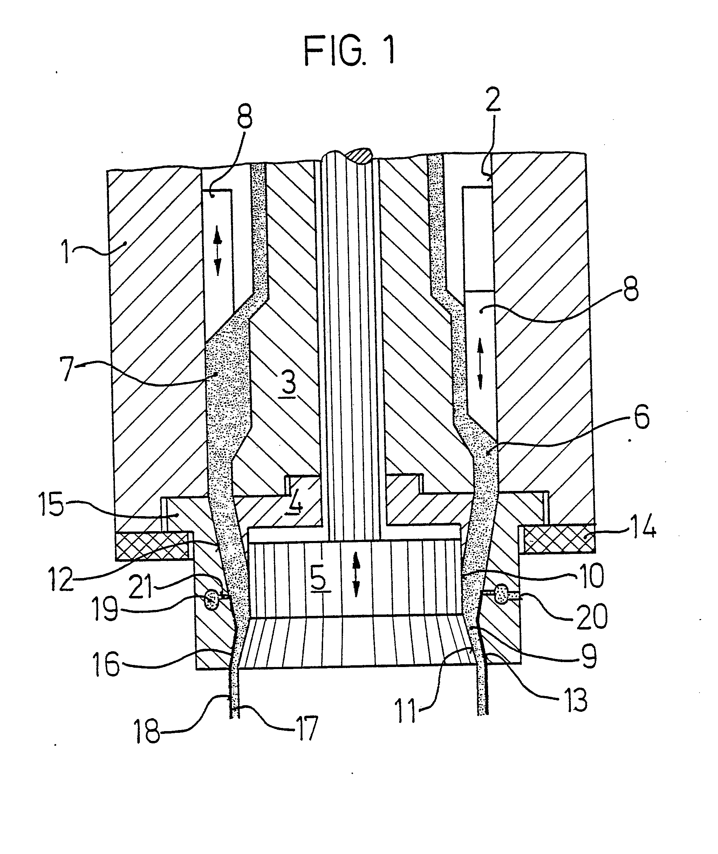

Mit dem Kopfspeicher nach Figur 1 ist ein aus zwei konzentrischen Schichten bestehender Vorformling herstellbar. Dabei wird auf den Schmelzestrang (17) für die Tragschicht ein zusätzlicher Schmelzestrang (18) unmittelbar im Düsenbereich, d.h. im Bereich der kegelförmigen Abschnitte (10) und (12) in den Fließkanal (6) eingetragen. Hierfür enthält der Düsenring (15) einen Ringkanal (19) mit wenigstens einer Zuführöffnung (20). Von dem Ringkanal führt ein Ringspalt(21) in den Fließkanal bzw. Düsenkanal(9). Die Wahl der Ausgestaltung der Schmelzezuführung für eine zusätzliche Schicht richtet sich primär nach dem Massestrom der erforderlich ist, um einen gewünschten Vorformling zur Verfügung zu stellen.

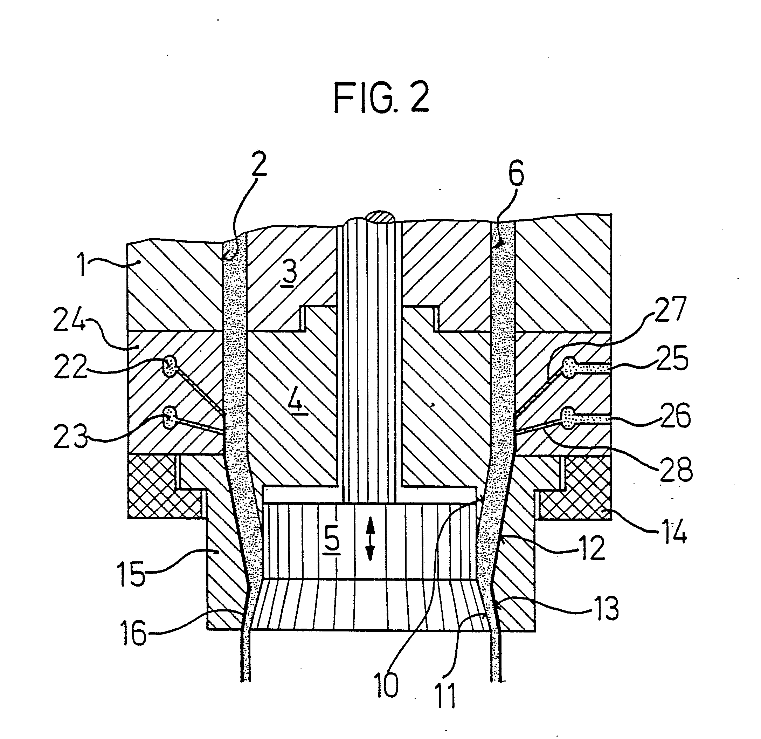

Entsprechend der in Figur 2 gezeigten Darstellung können zusätzliche Schmelzestränge auch vor dem Düsenbereich des Schlauchkopfes in den Fließkanal (6) zugeführt und mit dem Schmelzestrang für die Tragschicht verbunden werden. Die entsprechenden Ringkanäle (22, 23) sind dabei in dem Teil (24), welches zwischen dem Gehäuse (1) und dem Düsenring (15) eingefügt ist, vorgesehen. Jeder Ringkanal besitzt eine Zuführöffnung (25) bzw. (26) sowie einen Ringspalt(27) bzw. (28).

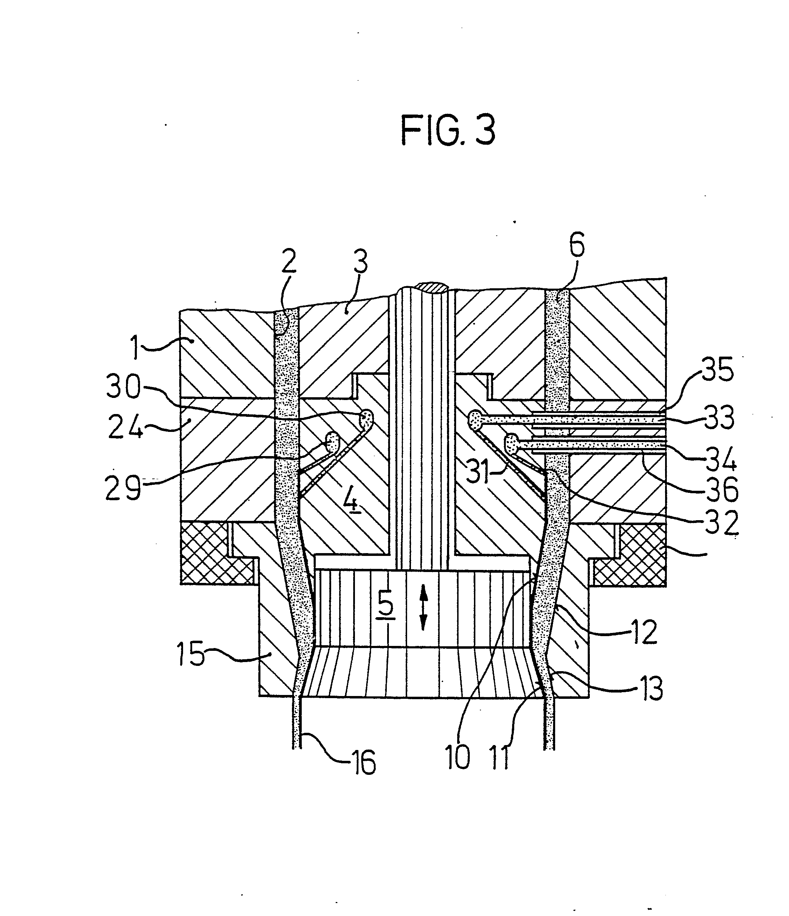

Während die zusätzlichen Schmelzestränge bei den Ausführungsformen nach den Figuren 1 und 2 auf der Außenseite des Vorformlings aufgebracht sind, werden diese mit der in Figur3 gezeigten Vorrichtung innen auf den Schmelzestrang für die Tragschicht geleitet. Hierfür sind die Ringkanäle (29, 30) und Ringspalte (31, 32) im Dorn-Bauteil(4)-ausgebildet. Die Schmelzezufuhr erfolgt über die Öffnungen (33, 34) und Rohre(35) bzw. - (36), die in dem Teil(24) angebracht sind und sich durch den Fließkanal (6) erstrecken.

Im Rahmen der Erfindung ist es zudem möglich, durch eine Kombination der Schlauchkopfausführungen Vorformlinge herzustellen, deren Tragschicht sowohl auf der Innenseite als auch auf der Außenseite mit einer oder mehreren zusätzlichen Schichten versehen ist. Darüber hinaus können diese zusätzlichen Schichten auch nur in Teilbereichen auf die Tragschicht aufgebracht werden, wenn beispielsweise für die Herstellung von Kraftstoffbehältern am Vorformling Zonen unterschiedlicher Dicke gefordert werden.

**Ansprüche**

1. Verfahren zur Herstellung blasgeformter Hohlkörper aus thermoplastischen Kunststoffen, bei dem ein Vorformling, dessen Wandung aus wenigstens zwei konzentrischen Schichten besteht, von denen eine Schicht als Tragschicht ausgebildet ist, aus einem Schlauchkopf oder Kopfspeicher ausgestoßen und von einer Blasform umfaßt wird, in der das Aufblasen zum Hohlkörper durch Einführen eines Druckmittels erfolgt, dadurch gekennzeichnet, daß die Schmelzestränge für die Tragschicht und für eine oder mehrere, innen und/oder außen auf der Tragschicht aufgebrachte Schichten kurz vor oder unmittelbar im Düsenbereich des Schlauchkopfes zusammengeführt werden, wobei das Verhältnis der Dicke der Tragschicht zur Dicke jeder weiteren Schicht ≦10:1 beträgt, und daß der Vorformling diskontinuierlich aus dem Schlauchkopf ausgestoßen wird.

2. Vorrichtung zur Durchführung des Verfahrens

nach Anspruch1 mit einem Schlauchkopf oder Kopfspeicher und einer Blasform, wobei der Schlauchkopf oder Kopfspeicher aus einem Gehäuse mit einer Führungsbohrung zur Aufnahme eines Dorns besteht, und der Dorn mit der Mantelfläche der Führungsbohrung einen Fließkanal und zwischen zwei miteinander korrespondierenden kegelförmigen Abschnitten einen Düsenbereich definiert, dadurch gekennzeichnet, daß der Fließkanal (6) mit einem Ringkolbenspeicher (7, 8) in Verbindung steht, und daß in den Fließkanal wenigstens ein Ringspalt (21, 27, 28, 31, 32) mündet.

3. Vorrichtung nach Anspruch2, dadurch gekennzeichnet, daß der Ringspalt (21, 27, 28, 31, 32) mit einem Ringkanal (19, 22, 23, 29, 30) mit wenigstens einer Zuführöffnung (20, 25, 26, 33, 34) in Verbindung steht.

4. Vorrichtung nach den Ansprüchen2 und 3, dadurch gekennzeichnet, daß der Ringkanal (29, 30) im Dorn des Schlauchkopfes oder Kopfspeicher ausgebildet ist, wobei der Dorn aus mehreren Bauteilen (3, 4, 5) gebildet ist.

# FIG. 1

# FIG. 2

# FIG. 3